# EUROPÄISCHE PATENTSCHRIFT

(11) **EP 0 473 886 B1**
(45) Veröffentlichungstag und Bekanntmachung des Hinweises auf die Patenterteilung: **02.11.1994**
(21) Anmeldenummer: 91109447.2
(22) Anmeldetag: 08.06.1991
(51) Int. Cl.: A61C 19/02

(54) **Sortimentbox**
Assortment box
Boîte du rassemblement

(30) Priorität: 04.09.1990 DE 9012753 U
(43) Veröffentlichungstag der Anmeldung: 11.03.1992
(73) Patentinhaber: Heraeus Kulzer GmbH, 63450 Hanau (DE)
(72) Erfinder: Eykmann, Rudolf, W-6393 Wehrheim/Ts (DE); Fritze, Joachim, Dr., W-6382 Friedrichsdorf (DE); Uhrig, Birgit, W-6390 Usingen (DE)
(74) Vertreter: Kühn, Hans-Christian

(56) Entgegenhaltungen:
- FR-A- 2 626 847
- GB-A- 1 079 953
- US-A- 4 155 452
- Dentalcolor lichthaertendes k+b Composit auf Mikrofillbasis (5288/D 218 SK,deutch,herausgegeben 1988),page 5

## Beschreibung

Die vorliegende Erfindung betrifft eine Sortimentbox in Modulbauweise für Dentalmaterialien mit einem Unterbau und einem Oberteil, das auf den Unterbau aufgesetzt ist, wobei der Unterbau aus Schubladen und Seitenteilen gebildet ist und das Oberteil einen Deckel aufweist (siehe den Oberbegriff von Anspruch 1).

Eine derartige Sortimentbox ist beispielsweise aus dem Prospekt "Dentacolor lichthärtendes k + b Composit auf Mikrofillbasis" (5288/D 218 SK, deutsch, herausgegeben 1988) bekannt.

In diesem Prospekt ist eine Sortimentbox für Dentalmaterialien gezeigt, die mehrere Schubfächer aufweist. Die Schubfächer sind als Kompaktteil ausgebildet, das aus einem Deckenteil, Seitenteilen und einem Rückenteil besteht. Mehrere dieser Schubfächer sind übereinander gestellt , wobei das unterste Schubfach auf einer Bodenplatte steht. In diesen Schubfächern befinden sich aus einem Stück aufgebaute Schubladen, an deren Vorderseite jeweils ein Griff fest angebracht ist. Auf der Deckenplatte des obersten Schubfaches dieses wie beschrieben gebildeten Unterbaus befindet sich ein Oberteil. Dieses Oberteil besteht aus einer Schublade wie sie in den Schubfächern des Unterbaus vorhanden sind und in der verschiedene Dentalmaterialien angeordnet werden können sowie aus einem über diese Schublade gestülpten Deckel. Das Oberteil ist auf den Unterbau gestellt.

Dieser so beschriebene Aufbau ist zum einen in seiner Herstellung sehr kostenintensiv, da die für die Herstellung benötigten Formwerkzeuge, wie Spritzgußformen, sehr kompliziert sind. Zum anderen ist diese Sortimentbox relativ instabil, weil das Oberteil auf den Unterbau einfach aufgestellt ist und der Deckel des Oberbaus auch lediglich aufgesteckt ist.

Aufgabe der vorliegenden Erfindung ist es deshalb, eine Sortimentbox für die Aufnahme von Dentalmaterialien zu schaffen, die unter Verwendung möglichst weniger verschiedenartiger Teile kostengünstig zu fertigen ist und dabei eine hohe Variabilität sowie einen in sich stabilen Aufbau gewährleistet.

Die Aufgabe wird für die eingangs charakterisierte Sortimentbox durch die kennzeichnenden Merkmale des Anspruchs 1 gelöst.

Die Verwendung identischer Seitenteile führt dazu, daß diese beliebig gegeneinander austauschbar sind. Durch ihre im wesentlichen ebene Gestaltung sind die Werkzeuge zu ihrer Herstellung relativ einfach zu fertigen. Die Steckverbindungen zwischen Seitenteilen und Boden- oder Deckelteilen ermöglichen eine unkomplizierte Montage des Oberbaus und der Module des Unterbaus. Dadurch, daß die Schubladen-Frontteile abnehmbar sind, besteht die Möglichkeit, die Schubladen auch außerhalb der Sortimentbox zu verwenden.

Der beschriebene Aufbau läßt eine beliebige Erweiterung der Sortimentbox zu, wobei einzelne Teile gegeneinander ausgetauscht werden können.

Als vorteilhaft erweist es sich, daß die plattenförmigen Verbindungsteile ein im rechten Winkel abgebogenes Rückenteil aufweisen, das die Rückwand des jeweiligen Moduls bzw. des Oberteils bildet. Dadurch wird die Stabilität des Moduls bzw. des Oberteils erhöht.

Als zweckmäßig erweist es sich dabei, daß das plattenförmige Verbindungsteil des Oberteils das Bodenteil des Oberteils bildet und an der Vorderseite des Oberteils an das Bodenteil ein bis etwa zur halben Höhe des Oberteils sich erstreckendes senkrecht auf dem Bodenteil stehendes Frontseitenteil angesetzt ist. Dadurch bildet das Oberteil ein Behältnis, in welches zum Beispiel Dentalmaterialien oder Einsätze zur Aufnahme von Dentalmaterialien hineingestellt werden können.

Der Fall, daß die plattenförmigen Verbindungsteile des Unterbaus jeweils Deckenteile bilden, hat den Vorteil, daß auch bei einzelner Verwendung eines Modules die Schubladen abgedeckt sind.

Als vorteilhaft erweist es sich, daß die Seitenteile auf ihren inneren, einander zugekehrten Flächen Halteelemente aufweisen, zwischen denen die Ränder des plattenförmigen Verbindungsteiles eingeklemmt sind. Dadurch ist eine unkomplizierte Montage der Module bzw. des Oberteiles möglich.

Um eine besonders hohe Stabilität zu sichern und auch die Beständigkeit gegenüber Dentalmaterialien zu erhöhen, können die plattenförmigen Verbindungsteile aus Aluminiumblech gebildet sind.

Es ist zweckmäßig, daß die Seitenteile auf ihren inneren, einander zugekehrten Flächen jeweils Schienen aufweisen, die im wesentlichen parallel zu den oberen und unteren Kanten der Seitenteile verlaufen und zwischen denen die Schubladen geführt sind. Dadurch wird eine exakte Führung der Schubladen ermöglicht, wodurch eine einfache Handhabung erreicht wird.

Zur Erhöhung der Standfestigkeit der einzelnen Schubladen auch außerhalb der Sortimentbox ist es zweckmäßig, daß jede Schublade an ihrer Unterseite parallel zu den Kanten einen umlaufenden Steg aufweist.

Zur besseren Handhabung der Schubladen ist es vorteilhaft, daß jede Schublade an den der Front- und der Rückseite der Sortimentbox zugewandten Seiten einen nach außen abgewinkelten Rand aufweist, an dessen Unterseite Noppen angeordnet sind. Mit Hilfe dieses Randes kann die Schublade besser aus der Sortimentbox herausgezogen werden. Dadurch, daß dieser abgewinkelte Rand an zwei gegenüberliegenden Seiten der Schublade angebracht ist, ist es möglich, die Schublade wahlweise mit unterschiedlichen Seiten zuerst in die Sortimentbox einzuschieben, wodurch eine gute Zugänglichkeit auch der sonst im hinteren Teil der Schublade befindlichen Gegenstände erzielt wird.

An der Unterseite der Schubladen kann zweckmäßiger Weise im Bereich der Kante, die parallel zu dem jeweiligen abgewinkelten Rand der Schublade verläuft, zwischen dieser und dem Steg, eine Wulst angeordnet sein, mit deren Hilfe das Schubladen-Frontteil besser an der Schublade befestigt werden kann.

Zur Befestigung des Schubladen-Frontteiles an der Schublade sollte das Schubladen-Frontteil auf seiner der Schublade zugewandten Seite zwei Schienen aufweisen, die in einem solchen Abstand voneinander im wesentlichen parallel zur Oberkante des Schubladen-Frontteiles verlaufen, daß zwischen ihnen der abgewinkelte Rand der Schublade eingeklemmt ist. Weiterhin befinden sich in der unteren Schiene an den den Noppen der Schublade entsprechenden Stellen Löcher, in denen die Noppen eingerastet sind. Eine zu diesen Schienen parallele, an der Unterkante des Schubladen-Frontteiles angeordnete Schiene weist an ihrer Oberseite eine Längsnut auf, in der die Wulst der Schublade liegt. Dadurch ist eine ausreichend stabile Befestigung zwischen Schublade und Schubladen-Frontteil gewährleistet und das Schubladen-Frontteil kann bei Bedarf auch wieder entfernt werden.

Zur Erhöhung der Stabilität der Sortimentbox beim Einsatz mehrerer Modulteile übereinander ist es zweckmäßig, daß an den Oberkanten der Seitenteile Verbindungselemente angeordnet sind, die in die Unterkanten der Seitenteile des folgenden Moduls in Ausnehmungen eingreifen. Dadurch wird ein fester Sitz der übereinanderliegenden Module gesichert.

Als besonders vorteilhaft erweist es sich dabei, daß an den Ausnehmungen in den Unterkanten der Seitenteile Gummielemente angeordnet sind, die über die Unterkanten und aus den inneren, einanderzugekehrten Flächen der Seitenteile hinausragen. Diese Gummielemente bewirken durch ihre Elastizität einen straffen Sitz der Seitenteile aufeinander und dienen gleichzeitig am unteren Modul als Füße der Sortimentbox.

Die unteren Schubladen jedes Moduls können an ihren zu den Seitenteilen parallelen Stegen in einer Nut der Gummielemente geführt sein. Dadurch wird die Stabilität der Sortimentbox weiter erhöht und es wird insbesondere verhindert, daß die Seitenteile des unteren Moduls auseinanderspreizen.

Zweckmäßigerweise kann der Deckel des Oberteils an seiner hinteren Kante schwenkbar mit dem Oberteil verbunden sein. Dadurch ist eine leichte Handhabbarkeit des Oberteils gewährleistet und die im Oberteil befindlichen Materialien sind gut zugänglich.

Um die Schwenkbewegung des Deckels des Oberteils stabil zu gestalten, kann der Deckel des Oberteils mit Scharnieren am Oberteil befestigt sein. Um ein Umklappen des Deckels und ein Anschlagen an der Rückwand der Sortimentbox zu verhindern, ist es vorteilhaft, daß die Scharniere einen hinteren Anschlag aufweisen.

Eine weitere Möglichkeit, die Stellung des Deckels im geöffneten Zustand zu fixieren, ist dadurch gegeben, daß an den Gleitflächen der Scharniere Rastelemente vorhanden sind.

Eine zweckmäßige Gestaltung des Deckels des Oberteils ist dadurch gegeben, daß das Oberteil-Frontteil auf die vordere Kante der Deckelplatte des Deckels aufgesteckt ist.

Die Frontteile können an ihrer Unterkante Griffmulden aufweisen. Dadurch ist eine einfache Handhabung der Schubladen und des Oberteils gewährleistet.

Für die Handhabung der Sortimentbox hat es sich als zweckmäßig erwiesen, daß die Schubladen-Frontteile und das Deckel-Frontteil jeweils an ihrer nach außen weisenden Seite von der Oberkante zur Unterkante des Teiles durchgehende Vertiefungen aufweisen, wobei alle Vertiefungen die gleiche Breite haben und im gleichen Abstand von einer Seitenkante der Teile angeordnet sind. In diese Vertiefungen können zum Beispiel Schilder eingeklemmt werden, die zur Etikettierung dienen und den jeweiligen Inhalt der Schubladen bzw. des Oberteils ausweisen.

An den dem Innern der Sortimentbox zugewandten Flächen der Seitenteile des Oberteils können Verkleidungselemente angeordnet sein, die an den Schienen der Seitenteile gehaltert sind. Dadurch werden diese Schienen verborgen und es entstehen glatte Seitenflächen im Inneren des Oberteiles der Sortimentbox.

Nachfolgend wird ein Ausführungsbeispiel der Erfindung anhand der Zeichnung näher erläutert.

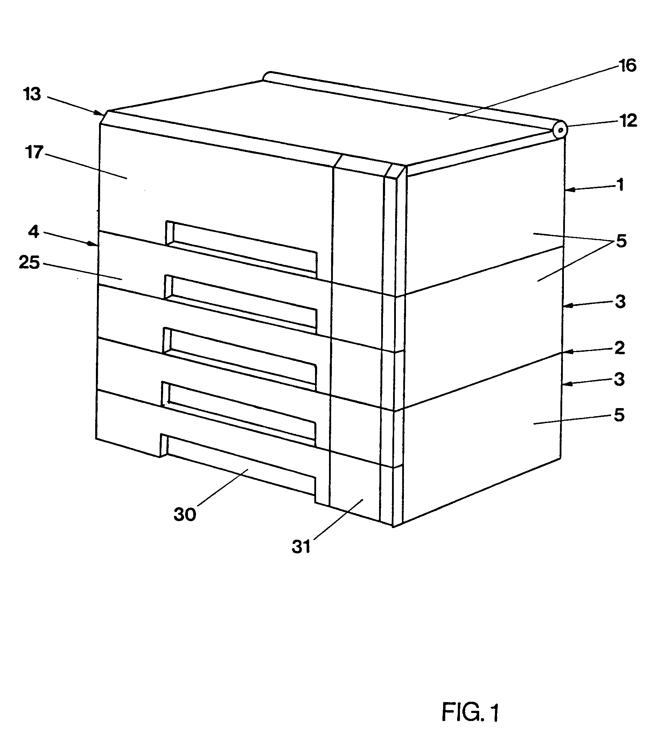

In der Zeichnung zeigt
- Figur 1: eine Sortimentbox in perspektivischer Darstellung

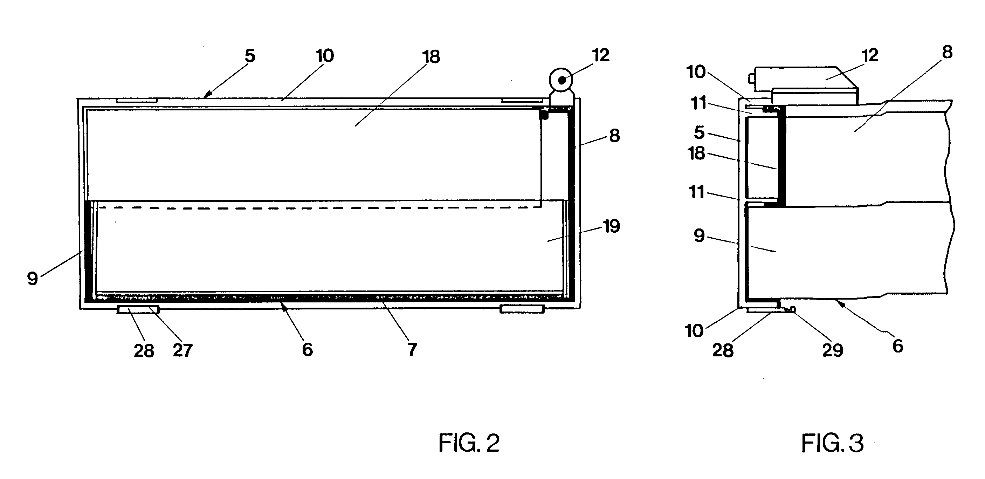

- Figur 2: die Seitenansicht des Oberteils der Sortimentbox im Schnitt
- Figur 3: die Vorderansicht eines Teils des Oberteils

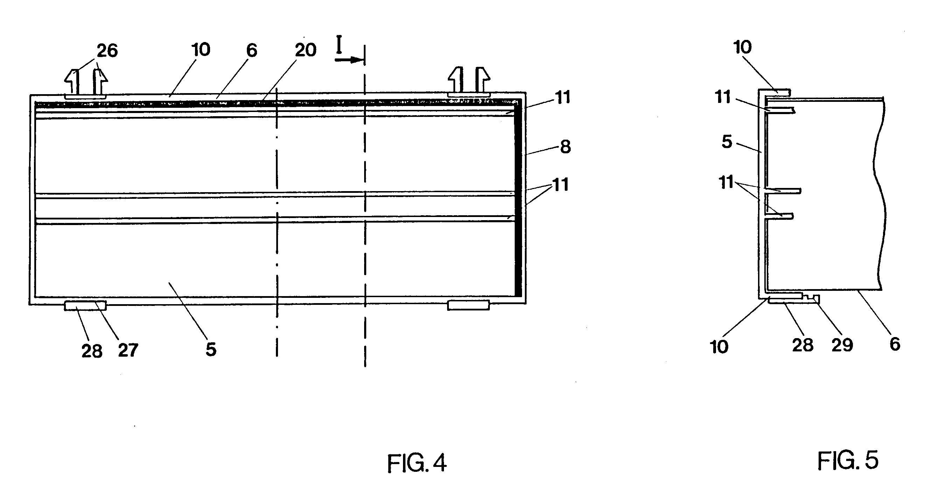

- Figur 4: die Seitenansicht eines Moduls im Schnitt
- Figur 5: das Seitenteil in der Vorderansicht in Richtung des Sichtpfeiles I in Figur 4

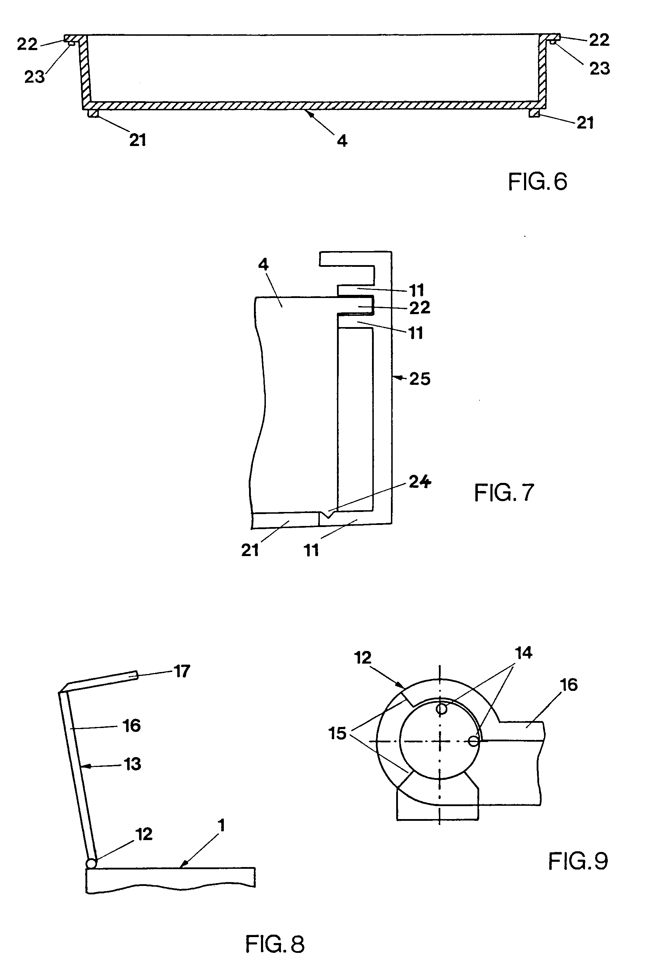

- Figur 6: eine Schublade der Sortimentbox in der Seitenansicht im Schnitt
- Figur 7: die Befestigung des Schubladen-Frontteiles an der Schublade
- Figur 8: eine Seitenansicht des aufgeklappten Deckels des Oberteils und
- Figur 9: ein Scharnier in der Seitenansicht im Schnitt.

Die Sortimentbox weist ein Oberteil 1 und einen Unterbau 2 auf, welcher aus zwei Modulen 3 besteht. Jedes Modul hat zwei Schubladen 4.

Die Seitenteile 5 des Oberteils 1 und der Module 3 des Unterbaus 2 sind identisch und weisen eine Symmetrie zu ihrer senkrecht auf den oberen und unteren Kanten stehenden Flächenhalbierenden auf. Dadurch können alle Seitenteile gegeneinander ausgetauscht werden. Jeweils zwei Seitenteile 5 sind durch ein ebenes Verbindungsteil 6 aus Aluminiumblech zusammengesteckt. Die Seitenteile 5 weisen einen nach innen gerichteten, umlaufenden Rand 10 und drei parallel zu den oberen und unteren Kanten der Seitenteile 5 verlaufende Schienen 11 auf, zwischen denen das Verbindungsteil 6 eingeklemmt ist.

Das im Oberteil 1 befindliche Verbindungsteil 6 bildet das Bodenteil 7 des Oberteils 1. Es weist ein im rechten Winkel abgebogenes Rückenteil 8 auf, das die Rückwand des Oberteils 1 bildet. An der Vorderseite des Oberteiles 1 ist ein Frontseitenteil 9 senkrecht an das Bodenteil 7 angesetzt. Es erstreckt sich etwa bis zur halben Höhe des Oberteils 1. Die Oberkante des Rückenteils 8 des Verbindungsteiles 6 ist ins Innere des Oberteiles 1 hin abgebogen und auf der so entstandenen Fläche sind zwei Scharniere 12 zur Befestigung des Deckels 13 des Oberteiles 1 angebracht. Die Scharniere 12 weisen an ihren Gleitflächen Rastelemente 14 auf, die ein Öffnen des Deckels 13 bis etwa 3° Grad über die Senkrechte hinaus ermöglichen. Um ein Hintenüberfallen des Deckels 13 bei Überschreiten der Rastpunkte zu verhindern, weisen die Scharniere 12 einen hinteren Anschlag 15 auf, der um einige Grad nach Überschreiten des Rastpunktes erreicht ist.

Der Deckel 13 besteht aus einer ebenen Deckelplatte 16 und einem Oberteil-Frontteil 17, das auf die vordere Kante der Deckelplatte 16 aufgesteckt ist und bei geschlossenem Deckel 13 das Oberteil 1 nach vorn hin abschließt.

Im Oberteil 1 wirken sich die aus den Seitenteilen 5 herausragenden Schienen 11 bei der Handhabung störend aus, so daß sie von Verkleidungselementen 18 abgedeckt sind, die an den Schienen 11 der Seitenteile 5 gehaltert sind.

In das Oberteil 1 kann nun beispielsweise eine Schale 19 zur Aufnahme von Dentalmaterialien hineingestellt werden.

Die Seitenteile 5 der Module 3 des Unterbaues 2 werden durch die Verbindungsteile 6 dergestalt zusammengehalten, daß diese Verbindungsteile 6 jeweils Deckenteile 20 bilden, die ein im rechten Winkel abgebogenes Rückenteil 8 aufweisen, das die Rückwand des jeweiligen Modules 3 bildet. Dabei ist das jeweilige Verbindungsteil 6 wie im Oberteil 1 auch zwischen dem umlaufenden Rand 10 der Seitenteile 5 und den Schienen 11 der Seitenteile 5 eingeklemmt.

Jedes Seitenteil 5 weist zwei Schubladen 4 auf, wobei die obere Schublade 4 zwischen den oberen beiden Schienen 11 und die untere Schublade 4 zwischen der unteren Schiene 11 und dem umlaufenden Rand 10 der Seitenteile 5 geführt werden. Jede Schublade 4 weist an ihrer Unterseite parallel zu den Kanten einen umlaufenden Steg 21 auf, der z. B. einen sicheren Stand der Schublade 4 auch außerhalb der Sortimentbox sicherstellt.

Jede Schublade 4 weist an den der Front- und der Rückseite der Sortimentbox zugewandten Seiten einen nach außen abgewinkelten Rand 22 auf, an dessen Unterseiten Noppen 23 angeordnet sind. Außerdem ist auf der Unterseite der Schubladen 4 im Bereich entlang der Kante, die parallel zu dem jeweiligen abgewinkelten Rand 22 der Schublade 4 verläuft, zwischen dieser und dem Steg 21, jeweils eine Wulst 24 angeordnet.

Mit Hilfe des abgewinkelten Randes 22 und der Wulst 24 wird an der Schublade 4 das Schubladen-Frontteil 25 befestigt. Dazu weist das Schubladen-Frontteil 25 auf seiner der Schublade 4 zugewandten Seite in Höhe des abgewinkelten Randes 22 zwei Schienen 11 auf, zwischen denen der abgewinkelte Rand 22 eingeklemmt ist. Dabei befinden sich in der unteren Schiene 11 an den den Noppen 23 der Schublade 4 entsprechenden Stellen Löcher, in denen die Noppen 23 eingerastet sind. Zu diesen Schienen 11 parallel, verläuft an der Unterkante des Schubladen-Frontteiles 25 eine Schiene 11, deren Oberseite eine Längsnut aufweist, in der die Wulst 24 der Schublade 4 liegt.

Die Module 3 des Unterbaues 2 und das Oberteil sind dadurch miteinander stabil verbunden, daß an den Oberkanten der Seitenteile 5 jeweils zwei Verbindungselemente in Form von paarweisen Widerhaken 26, deren Haken in einer Ebene parallel zur Außenfläche in dem jeweiligen Seitenteil 5 liegen, angeordnet sind, die in Ausnehmungen 27 in der Unterkante der Seitenteile 5 des folgenden Modules 3 eingreifen. An den Ausnehmungen 27 in den Unterkanten der Seitenteile 5 sind Gummielemente 28 angeordnet, die sowohl über die Unterkanten als auch aus den inneren einanderzugekehrten Flächen der Seitenteile 5 hinausragen. Auf dem Teil, der aus den inneren, einander zugekehrten Flächen der Seitenteile 5 hinausragt, befindet sich eine Nut 29, in der die untere Schublade 4 jedes Moduls 3 an ihren zu den Seitenteilen parallelen Stegen 21 geführt ist.

Die Frontteile weisen an ihrer Unterkante mittig angeordnet Griffmulden 30 auf.

Zwischen den Griffmulden 30 und den äußeren Seitenkanten der Frontteile sind auf einer Seite und übereinander angeordnet in den Frontteilen jeweils von der Oberkante bis zur Unterkante durchgehende Vertiefungen 31 gleicher Breite eingebracht, in denen beispielsweise Etiketten zur Kennzeichnung des Inhalts der jeweiligen Schublade 4 bzw. des Oberteils 1 eingeklemmt werden können.

## Patentansprüche

1. Sortimentbox in Modulbauweise für Dentalmaterialien mit einem Unterbau (2) und einem Oberteil (1), das auf den Unterbau aufgesetzt ist, wobei der Unterbau aus Schubladen (4) und Seitenteilen (5) gebildet ist und das Oberteil (1) einen Deckel (13) aufweist, dadurch gekennzeichnet, daß der Unterbau (2) mindestens ein Modul (3) mit zwei Schubladen (4) ist, daß das Oberteil (1) modulartige Seitenteile (5) aufweist, die mit den Seitenteilen (5) des Unterbaues (2) identisch sind und eine Symmetrie zu ihrer senkrecht auf den unteren und oberen Kanten stehenden Flächenhalbierenden aufweisen, daß übereinander angeordnete Module (3) an ihren Seitenteilen (5) miteinander lösbar verbunden sind, daß die Seitenteile (5) eines Moduls (3) jeweils durch ein parallel zur Grundfläche der Sortimentbox verlaufendes plattenförmiges Verbindungsteil (6) steckbar miteinander verbunden sind, wobei das Verbindungsteil (6) in die Seitenteile (5) eingreift und ein Bodenteil (7) oder ein Deckenteil (20) des jeweiligen Moduls (3) bildet, daß jede Schublade (4) ein als Blende dienendes Schubladen-Frontteil (25) aufweist, das auf die Frontseite der Schublade (4) aufgesteckt ist, und daß das Oberteil (1) eine im wesentlichen ebene Deckelplatte (16) und ein Oberteil-Frontteil (17) aufweist.

2. Sortimentbox nach Anspruch 1, dadurch gekennzeichnet, daß das plattenförmige Verbindungsteil (6) ein im rechten Winkel abgebogenes Rückenteil (8) aufweist, das die Rückwand des jeweiligen Moduls (3) bildet.

3. Sortimentbox nach Anspruch 2, dadurch gekennzeichnet, daß das plattenförmige Verbindungsteil (6) des Oberteiles (1) das Bodenteil (7) des Oberteils (1) bildet und an der Vorderseite des Oberteiles (1) ein bis etwa zur halben Höhe des Oberteils (1) sich erstreckendes, senkrecht auf dem Bodenteil (7) stehendes Frontseitenteil (9) angesetzt ist.

4. Sortimentbox nach Anspruch 1 oder 2, dadurch gekennzeichnet, daß die plattenförmigen Verbindungsteile (6) des Unterbaues (2) jeweils Deckenteile (20) bilden.

5. Sortimentbox nach einem der Ansprüche 1 bis 4, dadurch gekennzeichnet, daß die Seitenteile (5) auf ihren inneren, einander zugekehrten Flächen Halteelemente aufweisen, zwischen denen die Ränder des plattenförmigen Verbindungsteiles (6) eingeklemmt sind.

6. Sortimentbox nach einem der Ansprüche 1 bis 5, dadurch gekennzeichnet, daß die plattenförmigen Verbindungsteile (6) aus Aluminiumblech gebildet sind.

7. Sortimentbox nach einem der Ansprüche 1 bis 6, dadurch gekennzeichnet, daß die Seitenteile (5) auf ihren inneren, einander zugekehrten Flächen jeweils Schienen (11) aufweisen, die im wesentlichen parallel zu den oberen und unteren Kanten der Seitenteile (5) verlaufen und zwischen denen die Schubladen (4) geführt sind.

8. Sortimentbox nach einem der Ansprüche 1 bis 7, dadurch gekennzeichnet, daß jede Schublade (4) an ihrer Unterseite parallel zu den Kanten einen umlaufenden Steg (21) aufweist.

9. Sortimentbox nach einem der Ansprüche 1 bis 8, dadurch gekennzeichnet, daß jede Schublade (4) an den der Front- und der Rückseite der Sortimentbox zugewandten Seiten einen nach außen abgewinkelten Rand (22) aufweist, an dessen Unterseite Noppen (23) angeordnet sind.

10. Sortimentbox nach Anspruch 8 und 9, dadurch gekennzeichnet, daß auf der Unterseite der Schubladen (4) im Bereich entlang der Kante, die parallel zu dem jeweiligen abgewinkelten Rand (22) der Schublade (4) verläuft, zwischen dieser und dem Steg (21) eine Wulst (24) angeordnet ist.

11. Sortimentbox nach Anspruch 9 und 10, dadurch gekennzeichnet, daß das Schubladen-Frontteil (25) auf seiner der Schublade (4) zugewandtenn Seite zwei Schienen (11) aufweist, die in einem solchen Abstand voneinander im wesentlichen parallel zur Oberkante des Schubladen-Frontteiles (25) verlaufen, zwischen denen der abgewinkelte Rand (22) des Schubfaches (4) eingeklemmt ist, daß sich in der unteren Schiene (11) an den den Noppen (23) der Schublade (4) entsprechenden Stellen Löcher befinden, in denen die Noppen (23) eingerastet sind und daß eine zu diesen Schienen (11) parallele, an der Unterkante des Schubladen-Frontteiles (25) angeordnete Schiene (11) an ihrer Oberseite eine Längsnut aufweist, in der die Wulst (24) der Schublade (4) liegt.

12. Sortimentbox nach einem der Ansprüche 1 bis 11, dadurch gekennzeichnet, daß an den Oberkanten der Seitenteile (5) Verbindungselemente (26) angeordnet sind, die in die Unterkanten der Seitenteile (5) des folgenden Modules (3) in Ausnehmungen (27) eingreifen.

13. Sortimentbox nach Anspruch 12, dadurch gekennzeichnet, daß an den Ausnehmungen (27) in den Unterkanten der Seitenteile (5) Gummielemente (28) angeordnet sind, die über die Unterkanten und aus den inneren, einander zugekehrten Flächen der Seitenteile (5) hinausragen.

14. Sortimentbox nach Anspruch 13, dadurch gekennzeichnet, daß die unteren Schubladen (4) jedes Moduls (3) an ihren zu den Seitenteilen (5) parallelen Stegen (21) in einer Nut (29) der Gummielemente (28) geführt sind.

15. Sortimentbox nach einem der Ansprüche 1 bis 14, dadurch gekennzeichnet, daß der Deckel (13) des Oberteils an seiner hinteren Kante schwenkbar mit dem Oberteil (1) verbunden ist.

16. Sortimentbox nach Anspruch 15, dadurch gekennzeichnet, daß der Deckel (13) des Oberteils (1) mit dem Oberteil durch Scharniere (12) verbunden ist.

17. Sortimentbox nach Anspruch 16, dadurch gekennzeichnet, daß die Scharniere (12) einen hinteren Anschlag (15) aufweisen.

18. Sortimentbox nach Anspruch 16 oder 17, dadurch gekennzeichnet, daß an den Gleitflächen der Scharniere (12) Rastelemente (14) vorhanden sind.

19. Sortimentbox nach einem der Ansprüche 1 oder 18, dadurch gekennzeichnet, daß das Oberteil-Frontteil (17) auf die vordere Kante der Deckelplatte (16) aufgesteckt ist.

20. Sortimentbox nach einem der Ansprüche 1 bis 19, dadurch gekennzeichnet, daß die Frontteile an ihrer Unterkante Griffmulden (30) aufweisen.

21. Sortimentbox nach einem der Ansprüche 1 bis 20, dadurch gekennzeichnet, daß die Schubladen-Frontteile (25) und das Oberteil-Frontteil (17) jeweils an ihrer nach außen weisenden Seite von der Oberkante zur Unterkante des Teiles durchgehende Vertiefungen (31) aufweisen, wobei alle Vertiefungen (31) die gleiche Breite haben und im gleichen Abstand von einer Seitenkante der Teile angeordnet sind.

22. Sortimentbox nach einem der Ansprüche 1 bis 21, dadurch gekennzeichnet, daß an den Seitenteilen (5) des Oberteils (1) Verkleidungselemente (18) angeordnet sind, die an den Schienen (11) der Seitenteile (5) gehaltert sind.

## Claims

1. An assortment box in modular construction for dental materials with a base (2) and an upper part (1), which is placed onto the base, in which the base is formed from drawers (4) and side pieces (5) and the upper part (1) has a lid (13), characterised in that the base (2) is at least one module (3) with two drawers (4), that the upper part (1) has modular side pieces (5), which are identical to the side pieces (5) of the base (2) and have a symmetry to their surface bisectrices standing vertically to the lower and upper edges, that modules (3) arranged one above another are detachably connected with each other on their side pieces (5), that the side pieces (5) of a module (3) are in each case connected with each other so as to be able to be inserted, by a plate-shaped connecting piece (6) running parallel to the base surface of the assortment box, in which the connecting piece (6) engages into the side pieces (5) and forms a base piece (7) or a cover piece (20) of the respective module, that each drawer (4) has a drawer front piece (25) serving as shutter, which is placed onto the front side of the drawer (4), and that the upper part (1) has a substantially flat lid plate (16) and an upper part front piece (17).

2. An assortment box according to Claim 1, characterised in that the plate-shaped connecting piece (6) has a back piece (8) bent at right angles, which forms the rear wall of the respective module (3).

3. An assortment box according to Claim 2, characterised in that the plate-shaped connecting piece (6) of the upper part (1) forms the base piece (7) of the upper part (1), and a front side piece (9), standing vertically on the base piece (7) and extending up to approximately half the height of the upper part (1), is placed against the front side of the upper part (1).

4. An assortment box according to Claim 1 or 2, characterised in that the plate-shaped connecting pieces (6) of the base (2) in each case form cover pieces (20).

5. An assortment box according to one of Claims 1 to 4, characterised in that the side pieces (5) have holding elements on their inner faces facing each other, between which holding elements the edges of the plate-shaped connecting piece (6) are clamped.

6. An assortment box according to one of Claims 1 to 5, characterised in that the plate-shaped connecting pieces (6) are formed from aluminium sheet.

7. An assortment box according to one of Claims 1 to 6, characterised in that the side pieces (5) have on their inner faces, facing each other, in each case rails (11), which run substantially parallel to the upper and lower edges of the side pieces (5) and between which the drawers (4) are guided.

8. An assortment box according to one of Claims 1 to 7, characterised in that each drawer (4) has on its underside parallel to the edges an encircling cross-piece (21).

9. An assortment box according to one of Claims 1 to 8, characterised in that each drawer (4) has on the sides facing the front and rear sides of the assortment box an outwardly angled edge (22), against the underside of which nubs (23) are arranged.

10. An assortment box according to Claim 8 and 9, characterised in that on the underside of the drawers (4) in the region along the edge which runs parallel to the respective angled edge (22) of the drawer (4), between the latter and the cross-piece (21) a bead (24) is arranged.

11. An assortment box according to Claim 9 and 10, characterised in that the drawer front piece (25) has on its side facing the drawer (4) two rails (11), which run at such a distance from each other substantially parallel to the upper edge of the drawer front piece (25), between which the angled edge (22) of the drawer compartment (4) is clamped, that in the lower rail (11), at the sites corresponding to the nubs (23) of the drawer (4), holes are to be found, in which the nubs (23) are engaged, and that a rail (11), parallel to these rails (11), arranged on the lower edge of the drawer front piece (25), has on its upper side a longitudinal groove, in which the bead (24) of the drawer (4) lies.

12. An assortment box according to one of Claims 1 to 11, characterised in that on the upper edges of the side pieces (5) connecting elements (26) are arranged, which engage into the lower edges of the side pieces (5) of the following module (3) in recesses (27).

13. An assortment box according to Claim 12, characterised in that on the recesses (27) in the lower edges of the side pieces (5) rubber elements (28) are arranged, which project over the lower edges and out of the inner faces of the side pieces (5) facing each other.

14. An assortment box according to Claim 13, characterised in that the lower drawers (4) of each module (3) on their cross-pieces (21) parallel to the side pieces (5) are guided in a groove (29) of the rubber elements (28).

15. An assortment box according to one of CLaims 1 to 14, characterised in that the lid (13) of the upper part is pivotably connected on its rear edge with the upper part (1).

16. An assortment box according to Claim 15, characterised in that the lid (13) of the upper part (1) is connected with the upper part by hinges (12).

17. An assortment box according to Claim 16, characterised in that the hinges (12) have a rear stop (15).

18. An assortment box according to Claim 16 or 17, characterised in that on the sliding faces of the hinges (12) detent elements (14) are present.

19. An assortment box according to one of Claims 1 or 18, characterised in that the upper part front piece (17) is placed onto the front edge of the lid plate (16).

20. An assortment box according to one of Claims 1 to 19, characterised in that the front pieces have grip cavities (30) on their lower edge.

21. An assortment box according to one of Claims 1 to 20, characterised in that the drawer front pieces (25) and the upper part front piece (17) in each case have on their outwardly-pointing side continuous depressions (31) from the upper edge to the lower edge of the piece, in which all the depressions (31) have the same width and are arranged at the same distance from a side edge of the pieces.

22. An assortment box according to one of Claims 1 to 21, characterised in that on the side pieces (5) of the upper part (1) lining elements (18) are arranged, which are secured on the rails (11) of the side pieces (5).

## Revendications

1. Boîte d'assortiment en construction modulaire pour des matériaux dentaires, comportant une base inférieure (2) et une partie supérieure (1) qui est posée sur la base inférieure, la base inférieure étant formée de tiroirs (4) et de parties latérales (5), et la partie supérieure (1) présentant un couvercle (13), caractérisée en ce que la base inférieure (2) est au moins un module (3) avec deux tiroirs (4), en ce que la partie supérieure (1) présente des parties latérales modulaires (5) qui sont identiques aux parties latérales (5) de la base inférieure (2) et présentent une symétrie par rapport aux droites, perpendiculaires par rapport aux arêtes inférieures et supérieures, qui divisent leurs surfaces par moitié, en ce que des modules (3) agencés les uns au-dessus des autres sont reliés les uns aux autres de façon détachable par leurs parties latérales (5), en ce que les parties latérales (5) d'un module (3) sont reliées respectivement les unes aux autres de façon enfichable par un élément de liaison (6) en forme de plaque et s'étendant parallèlement par rapport à la surface de base de la boîte d'assortiment, l'élément de liaison (6) s'engageant dans les parties latérales (5) et formant une partie de fond (7) ou une partie de couverture (20) du module respectif (3), en ce que chaque tiroir (4) présente un élément frontal de tiroir (25) servant d'obturateur qui est enfiché sur la face frontale du tiroir (4), et en ce que la partie supérieure (1) présente une plaque de couvercle (16) sensiblement plane et un élément frontal (17) de la partie supérieure.

2. Boîte d'assortiment selon la revendication 1, caractérisée en ce que l'élément de liaison (6) en forme de plaque présente un élément arrière (8) plié sous un angle droit, qui forme la paroi arrière du module respectif (3).

3. Boîte d'assortiment selon la revendication 2, caractérisée en ce que l'élément de liaison (6) en forme de plaque de la partie supérieure (1) forme la partie de fond (7) de la partie supérieure (1) et en ce que sur la face avant de la partie supérieure (1) est posé un élément de face frontale (9) qui s'étend approximativement jusqu'à la mi-hauteur de la partie supérieure (1) et qui est perpendiculaire sur la partie de fond (7).

4. Boîte d'assortiment selon l'une ou l'autre des revendications 1 et 2, caractérisée en ce que les éléments de liaison (6) en forme de plaque de la base inférieure (2) forment respectivement des parties de couverture (20).

5. Boîte d'assortiment selon l'une quelconque des revendications 1 à 4, caractérisée en ce que les parties latérales (5) présentent sur leurs surfaces intérieures orientées l'une vers l'autre des éléments de retenue entre lesquels sont serrés les bords de l'élément de liaison (6) en forme de plaque.

6. Boîte d'assortiment selon l'une quelconque des revendications 1 à 5, caractérisée en ce que les éléments de liaison (6) en forme de plaque sont formés par des tôles d'aluminium.

7. Boîte d'assortiment selon l'une quelconque des revendications 1 à 6, caractérisée en ce que les parties latérales (5) présentent sur leurs surfaces intérieures orientées l'unes vers l'autre respectivement des rails (11) qui s'étendent sensiblement parallèlement par rapport aux arêtes supérieures et inférieures des parties latérales (5) et entre lesquels sont guidés les tiroirs (4).

8. Boîte d'assortiment selon l'une quelconque des revendications 1 à 7, caractérisée en ce que chaque tiroir (4) présente à sa face inférieure parallèlement aux arêtes une barrette périphérique (21).

9. Boîte d'assortiment selon l'une quelconque des revendications 1 à 8, caractérisée en ce que chaque tiroir (4) présente sur les faces orientées vers la face frontale ou arrière de la boîte d'assortiment un bord (22) coudé vers l'extérieur, dans la face inférieure duquel sont agencés des boutons (23).

10. Boîte d'assortiment selon les revendications 8 et 9, caractérisée en ce que sur la face inférieure des tiroirs (4) dans la région le long de l'arête qui s'étend parallèlement au bord (22) coudé respectif du tiroir (4), un bourrelet (24) est agencé entre le tiroir (4) et la barrette (21).

11. Boîte d'assortiment selon les revendications 9 et 10, caractérisée en ce que l'élément frontal (25) du tiroir présente sur sa face orientée vers le tiroir (4) deux rails (11) qui s'étendent sensiblement parallèlement à l'arête supérieure de l'élément frontal (25) du tiroir, entre lesquels est serré le bord coudé (22) du casier à tiroir (4), et qui s'étendent à une distance telle l'un de l'autre que dans le rail inférieur (11) aux endroits correspondant aux boutons (23) du tiroir (4) se trouvent des trous dans lesquels les boutons (23) sont encliquetés, et en ce qu'un rail (11) agencé parallèlement auxdits rails (11) sur l'arête inférieure de l'élément frontal (25) du tiroir présente sur sa face supérieure une gorge longitudinale dans laquelle est situé le bourrelet (24) du tiroir (4).

12. Boîte d'assortiment selon l'une quelconque des revendications 1 à 11, caractérisée en ce que sur les arêtes supérieures des parties latérales (5) sont agencés des éléments de liaison (26) qui s'engagent dans des évidements (27) dans les arêtes inférieures des parties latérales (5) du module suivant (3).

13. Boîte d'assortiment selon la revendication 12, caractérisée en ce que dans les évidements (27) dans les arêtes inférieures des parties latérales (5) sont agencés des éléments en caoutchouc (28) qui dépassent au-dessus des arêtes inférieures et hors des surfaces intérieures orientées l'une vers l'autre des parties latérales (5).

14. Boîte d'assortiment selon la revendication 13, caractérisée en ce que les tiroirs inférieurs (4) de chaque module (3) sont guidés sur leurs barrettes (21) parallèles aux parties latérales (5) dans une gorge (29) des éléments en caoutchouc (28).

15. Boîte d'assortiment selon l'une quelconque des revendications 1 à 14, caractérisée en ce que le couvercle (13) de la partie supérieure est relié en pivotement par son arête arrière à la partie supérieure (1).

16. Boîte d'assortiment selon la revendication 15, caractérisée en ce que le couvercle (13) de la partie supérieure (1) est relié à la partie supérieure via des charnières (12).

17. Boîte d'assortiment selon la revendication 16, caractérisée en ce que les charnières (12) présentent une butée arrière (15).

18. Boîte d'assortiment selon l'une ou l'autre des revendications 16 et 17, caractérisée en ce qu'il est prévu des éléments d'enclenchement (14) sur les surfaces de glissement des charnières (12).

19. Boîte d'assortiment selon l'une ou l'autre des revendications 1 et 18, caractérisée en ce que l'élément frontal (17) de la partie supérieure est enfiché sur l'arête avant de la plaque de couvercle (16).

20. Boîte d'assortiment selon l'une quelconque des revendications 1 à 19, caractérisée en ce que les éléments frontaux présentent sur leur arête inférieure des poignées en creux (30).

21. Boîte d'assortiment selon l'une quelconque des revendications 1 à 20, caractérisée en ce que les éléments frontaux (25) de tiroir et l'élément frontal (17) de la partie supérieure présentent respectivement sur leur face dirigée vers l'extérieur des creux continus (31) depuis l'arête supérieure jusqu'à l'arête inférieure de l'élément, tous les creux (31) ayant la même largeur et étant agencés à distance égale par rapport à une arête latérale des éléments.

22. Boîte d'assortiment selon l'une quelconque des revendications 1 à 21, caractérisée en ce que sur les parties latérales (5) de la partie supérieure (1) sont agencés des éléments de revêtement (18) qui sont montés sur les rails (11) des parties latérales (5).
